# FASCICULE DE BREVET EUROPEEN

(11) **EP 1 250 200 B1**
(45) Date de publication et mention de la délivrance du brevet: **08.12.2004**
(21) Numéro de dépôt: 01907623.1
(22) Date de dépôt: 18.01.2001
(51) Int. Cl.: B21D 22/26, B21D 51/18, B23G 1/16

(54) **PROCEDE DE REALISATION D'UNE BONDE D'UN FUT METALLIQUE**
VERFAHREN ZUR HERSTELLUNG EINES SPUNDES AN EINEM METALLISCHEN FASS
METHOD FOR MAKING A BUNG FOR A METAL CASK

(30) Priorité: 19.01.2000 FR 0000638
(43) Date de publication de la demande: 23.10.2002
(73) Titulaire: GALLAY S.A., 93500 Saint-Denis (FR)
(72) Inventeur: CARAYON, Jean-Claude, Le Pont Canal, 13122 Ventabren (FR); BRUN, Lucien, F-10000 Troyes (FR)
(74) Mandataire: Santarelli
(86) Numéro de dépôt international: PCT/FR2001/000158
(87) Numéro de publication internationale: WO 2001/053021

(56) Documents cités:
- WO-A-92/09496
- US-A- 5 237 849
- US-A- 5 709 313

## Description

L'invention se rapporte à un procédé de réalisation d'une bonde d'un fût métallique, notamment la réalisation d'une bonde dans un fût à paroi de tôle relativement mince, typiquement de moins de 2 mm d'épaisseur. Elle concerne un perfectionnement permettant de simplifier la réalisation d'une telle bonde et de réduire le prix de revient.

Un procédé connu pour réaliser une bonde dans un fût métallique, notamment un fût à paroi mince, consiste à rapporter à la paroi du fût une collerette, préfabriquée, relativement épaisse et filetée intérieurement: Une telle collerette présente une embase plate à contour octogonal. On perce la paroi du fût et on conforme le métal autour du perçage en pratiquant à la fois une empreinte octogonale du côté interne et une cheminée cylindrique s'étendant vers l'extérieur. La collerette est insérée dans la cheminée de sorte que son embase octogonale prenne place dans l'empreinte correspondante, avec interposition d'un joint d'étanchéité. La fixation de la collerette est assurée par un roulé de celle-ci sur le bord de ladite cheminée.

Le document WO-A-92/09496 décrit un procédé de fabrication d'un fût ou bidon, selon lequel une ouverture est réalisée dans la paroi supérieure et l'on étire le matériau adjacent à l'ouverture en sorte de définir un épaulement annulaire. Ce dernier est ensuite comprimé vers le bas en sorte d'en augmenter l'épaisseur et un filetage femelle est formé à l'intérieur de cet épaulement annulaire, lequel peut recevoir un élément de fermeture. La réalisation du filetage est obtenue à l'aide d'une matrice intérieurement filetée coopérant avec une matrice extérieurement filetée, en une seule partie et de plus grand diamètre que la paroi à fileter.

Le document US-A-5 709 313 décrit la réalisation d'un embout fileté dans la paroi d'un fût, avec la formation d'un rebord qui protège la partie intérieurement filetée de cet embout. En règle générale, ce rebord s'étend sur la majeure partie de la hauteur de cet embout et donc de la partie intérieurement filetée (colonne 2, dernier paragraphe et les références 118, 218 et 318 des figures 11 à 13). Mais, dans les figures 20 et 21, la partie recourbée de l'épaulement ne s'étend qu'au dessus de la partie filetée. Il semble que la formation de cette partie recourbée est réalisée après la réalisation des filets, en tout cas au plus tôt en même temps que ces filets.

L'invention permet de supprimer purement et simplement la collerette et le joint tout en simplifiant les opérations de formation de la bonde.

A cet effet, l'invention concerne un procédé de réalisation d'une bonde de fût métallique consistant notamment à conformer une cheminée sensiblement cylindrique par emboutissage de la paroi du fût, et à former un filetage à l'intérieur de cette cheminée en renforçant extérieurement cette cheminée pendant la réalisation de ce filetage, en entourant cette cheminée par une bague rigide ou une structure analogue, caractérisé en ce que cette bague rigide ou structure analogue définit une surface de butée annulaire cylindrique.

Pour une tôle mince, on met en oeuvre un taraudage à molette, connu en soi, permettant d'obtenir le filetage sans enlèvement de métal. Il est à noter que ce type de taraudage à molette n'est traditionnellement pas possible sur des tôles minces. Avantageusement, pour renforcer extérieurement ladite cheminée pendant la réalisation du filetage pour éviter tout risque de déchirement de la tôle, on peut par exemple entourer la cheminée par une bague rigide, éventuellement constituée de plusieurs secteurs venant prendre appui à l'extérieur de la cheminée, de façon à maintenir celle-ci pendant la réalisation du filetage.

En outre, avant le perçage de la paroi du fût initialisant la formation de la cheminée, on peut procéder avantageusement à un pré-emboutissage aboutissant à la réalisation d'un bombé de préformage. La partie périphérique de ce bombé subsiste à la base de la cheminée, ce qui réalise une sorte de cuvette favorisant la vidange complète du fût, en fin d'utilisation. Le nettoyage éventuel du fût est également grandement facilité par cet agencement.

L'invention sera mieux comprise à la lumière de la description qui va suivre, donnée uniquement à titre d'exemple et faite en référence aux dessins annexés dans lesquels :

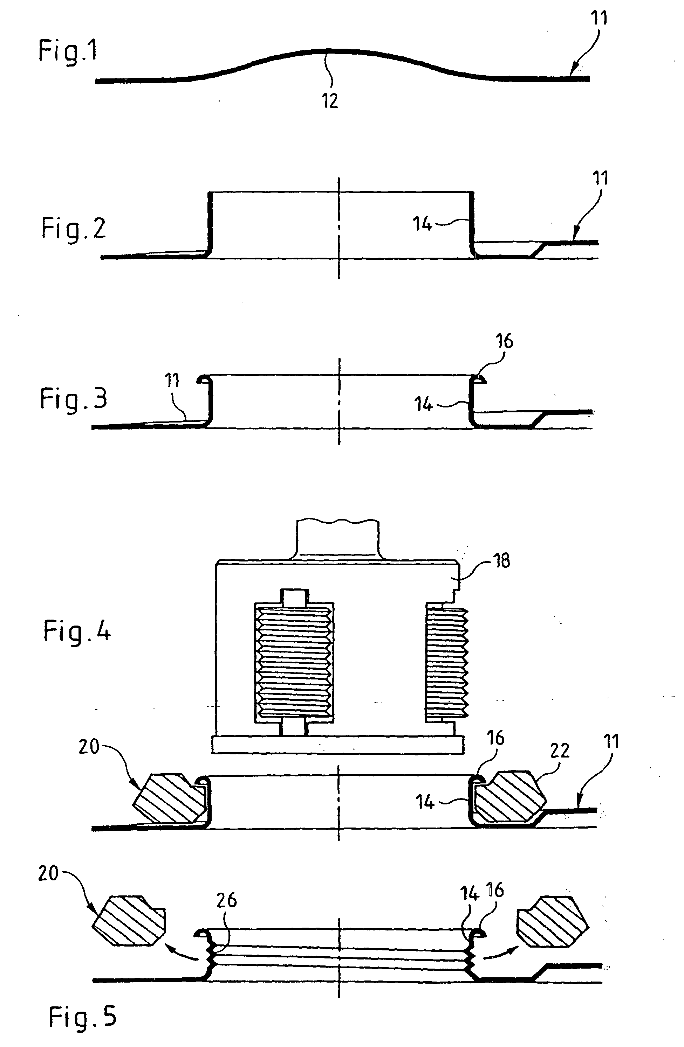

- les figures 1 à 5 illustrent les opérations successives de formation d'une bonde dans une paroi d'un fût métallique.

Les dessins illustrent les principales opérations de formation d'une bonde de fût métallique conformément au principe de l'invention. La bonde est ici conformée dans une paroi d'extrémité 11 du fût, globalement plane ou très légèrement bombée ; elle pourrait aussi être réalisée dans la paroi cylindrique dudit fût. Une première opération illustrée à la figure 1 consiste à réaliser un léger bombé 12, par déformation de la tôle dans la paroi 11 de l'intérieur vers l'extérieur, à l'emplacement souhaité de la bonde. On définit ainsi une cuvette interne. La seconde opération illustrée à la figure 2 consiste à conformer une cheminée 14 sensiblement cylindrique par emboutissage avec crevé de la paroi du fût, à l'emplacement du bombé. De ce fait, la cheminée se raccorde au reste de la paroi 11 par la partie périphérique de la cuvette interne, en un arrondi relativement prononcé, ce qui est de nature à favoriser ultérieurement la vidange complète du fût.

Une troisième opération illustrée à la figure 3 consiste à rabattre le bord saillant de la cheminée pour former un roulé extérieur 16. L'outillage nécessaire pour la réalisation des opérations illustrées aux figures 1 à 3 est classique et n'a donc pas été représenté.

La figure 4 illustre une étape plus particulièrement représentative du procédé de l'invention. Cette étape se déroule après la formation du roulé 16. Elle consiste à former un filetage à l'intérieur de la cheminée. S'agissant d'une tôle mince, le filetage est pratiqué sans enlèvement de métal par mise en oeuvre d'un taraudage de déformation ou taraudage à molette, connu en soi. La figure 4 montre le taraud à molette 18 avant l'opération de filetage. Pour éliminer tout risque de déchirement du métal, on entoure la cheminée par une bague rigide 20, constituée d'au moins deux secteurs annulaires, pendant la réalisation du filetage. Cette bague ou toute structure analogue définit une surface de butée annulaire cylindrique qui vient s'appliquer contre la face externe de la cheminée 14. Les secteurs de la bague définissent une portée tronconique extérieure 22. Un support extérieur, annulaire, monobloc, comportant une portée tronconique complémentaire (non représentée) vient prendre appui contre cette portée tronconique 22 pour maintenir les secteurs en place pendant l'opération de taraudage.

La figure 5 illustre le retrait des secteurs constituant la bague rigide 20, une fois le filetage 26 conformé dans la paroi de la cheminée 14.

Le procédé a été expérimenté avec succès sur des fûts réalisés avec de la tôle d'épaisseur inférieure à 1 mm, typiquement 0,7 à 0,8 mm, pour la réalisation de bondes de différents diamètres allant de 25 à 60 mm.

## Revendications

1. Procédé de réalisation d'une bonde de fût métallique consistant notamment à conformer une cheminée (14) sensiblement cylindrique par emboutissage de la paroi (11) du fût, et à former un filetage (26) à l'intérieur de cette cheminée en renforçant extérieurement cette cheminée pendant la réalisation de ce filetage, en entourant cette cheminée par une bague rigide (20) ou une structure analogue, **caractérisé en ce que** cette bague rigide ou structure analogue définit une surface de butée annulaire cylindrique.

2. Procédé selon la revendication 1, **caractérisé en ce qu'**on forme le filetage sans enlèvement de métal par mise en oeuvre d'un taraudage à molette.

3. Procédé selon la revendication 2, **caractérisé en ce qu'**il comporte, avant de réaliser le filetage, une étape selon laquelle on rabat le bord de cette cheminée en un roulé extérieur (16).

4. Procédé selon la revendication 3, **caractérisé en ce que** cette bague rigide est constituée d'au moins deux secteurs annulaires et vient s'appliquer contre la face externe de la cheminée pendant la réalisation du filetage.

5. Procédé selon la revendication 4, **caractérisé en ce que** la bague rigide vient s'appliquer contre la face externe de la cheminée entre la paroi du fût et le roulé extérieur.

6. Procédé selon la revendication 4 ou la revendication 5, **caractérisé en ce que** les secteurs de la bague définissent une portée tronconique extérieure (22) et un support extérieur annulaire monobloc, comportant une portée tronconique complémentaire, vient prendre appui contre cette portée tronconique pour maintenir les secteurs en place pendant l'opération de taraudage.

7. Procédé selon l'une quelconque des revendications précédentes, **caractérisé en ce que** l'on réalise un bombé (12) dans la paroi dudit fût à l'emplacement de la bonde, avant formation de ladite cheminée, pour obtenir une cuvette interne favorisant la vidange complète dudit fût.

8. Procédé selon l'une quelconque des revendications précédentes,
**caractérisé en ce que** le fût est réalisé avec de la tôle d'épaisseur inférieure à 1 mm, et la bonde a un diamètre allant de 25 à 60 mm.

## Patentansprüche

1. Verfahren zur Herstellung eines Metallfass-Zapflochs, das insbesondere darin besteht, einen im Wesentlichen zylindrischen Rohrstutzen (14) durch Ziehen der Wand (11) des Fasses auszubilden und in diesem Rohrstutzen ein Gewinde (26) auszubilden, wobei dieser Rohrstutzen während der Herstellung dieses Gewindes außen verstärkt wird, indem dieser Rohrstutzen von einem starren Ring (20) oder einer analogen Struktur umgeben wird, **dadurch gekennzeichnet, dass** dieser starre Ring oder die analoge Struktur eine zylindrische, ringförmige Anschlagoberfläche definiert.

2. Verfahren nach Anspruch 1, **dadurch gekennzeichnet, dass** das Gewinde ohne Metallabhebung durch Ausführen eines Gewindeschneidvorgangs mit Rändelwerkzeug gebildet wird.

3. Verfahren nach Anspruch 2, **dadurch gekennzeichnet, dass** es vor der Herstellung des Gewindes einen Schritt umfasst, bei dem der Rand dieses Rohrstutzens zu einer äußeren Rolle (16) umgebogen wird.

4. Verfahren nach Anspruch 3, **dadurch gekennzeichnet, dass** der starre Ring aus wenigstens zwei ringförmigen Sektoren gebildet ist und während der Herstellung des Gewindes gegen die äußere Fläche des Rohrstutzens gedrückt wird.

5. Verfahren nach Anspruch 4, **dadurch gekennzeichnet, dass** der starre Ring gegen die äußere Fläche des Rohrstutzens zwischen der Fasswand und der äußeren Rolle gedrückt wird.

6. Verfahren nach Anspruch 4 oder Anspruch 5, **dadurch gekennzeichnet, dass** die Sektoren des Rings einen äußeren kegelstumpfförmigen Bereich (22) definieren und dass sich ein ringförmiger äußerer Monoblockträger, der einen komplementären kegelstumpfförmigen Bereich aufweist, gegen diesen kegelstumpfförmigen Bereich abstützt, um die Sektoren während des Gewindeschneidvorgangs festzuhalten.

7. Verfahren nach einem der vorhergehenden Ansprüche, **dadurch gekennzeichnet, dass** in der Wand des Fasses am Ort des Zapflochs eine Ausbauchung (12) gebildet wird, bevor der Rohrstutzen ausgebildet wird, um eine innere Schale zu bilden, die die vollständige Entleerung des Fasses begünstigt.

8. Verfahren nach einem der vorhergehenden Ansprüche, **dadurch gekennzeichnet, dass** das Fass mit einem Blech mit einer Dicke, die kleiner als 1 mm ist, hergestellt wird und dass das Zapfloch einen Durchmesser im Bereich von 25 bis 60 mm hat.

## Claims

1. Process for the production of a bung for a metal cask consisting in particular of forming an approximately cylindrical shaft (14) by stamping the wall (11) of the cask, and forming a thread (26) inside this shaft by reinforcing this shaft on the outside during production of this thread, by encircling this shaft with a rigid ring (20) or a similar structure, **characterized in that** this rigid ring or similar structure defines an annular cylindrical abutment surface.

2. Process according to claim 1, **characterised in that** the thread is formed without removing any metal by using roller threading.

3. Process according to claim 2, **characterised in that** it includes, before production of the thread, a stage of folding down the edge of this shaft to form an external rolled edge (16).

4. Process according to claim 3, **characterised in that** this rigid ring is constituted by at least two annular sections and comes to bear on the external face of the shaft during production of the thread.

5. Process according to claim 4, **characterised in that** the rigid ring bears on the external face of the shaft between the wall of the cask and the external rolled edge.

6. Process according to claim 4 or claim 5, **characterised in that** the sections of the ring define an external tapered bearing surface (22) and an external annular monobloc support comprising a complementary tapered bearing surface which bears against this tapered bearing surface in order to keep the sections in place during the threading operation.

7. Process according to any one of the previous claims, **characterised in that** it consists of creating a dome (12) in the wall of the said cask at the location of the bung, before formation of the said shaft, in order to obtain an internal cuvette encouraging the complete emptying of said cask.

8. Process according to any one of the preceding claims, **characterized in that** the cask is made of sheet metal less than 1 mm thick and the bung has a diameter ranging from 25 to 60 mm.
